# EUROPEAN PATENT SPECIFICATION

(11) **EP 2 846 629 B1**
(45) Date of publication and mention of the grant of the patent: **23.12.2015**
(21) Application number: 13725849.7
(22) Date of filing: 02.04.2013
(51) Int. Cl.: A01K 31/08

(54) **COLLAPSIBLE ANIMAL HOUSE OR SHELTER, IN PARTICULAR A BIRDHOUSE**
ZUSAMMENKLAPPBARE TIERBEHAUSUNG ODER SCHUTZRAUM, INSBESONDERE EIN VOGELHAUS
REFUGE OU ABRI PLIANT POUR ANIMAUX, EN PARTICULIER CABANE À OISEAUX

(30) Priority: 07.05.2012 SI 201200139; 15.03.2013 SI 201300061
(43) Date of publication of application: 18.03.2015
(73) Proprietor: K.M.K. Box, d.o.o., 6310 Izola (SI); Zelic, Goran, 4240 Radovljica (SI)
(72) Inventor: ZELIC, Goran, 4240 Radovljica (SI); FLORJANCIC, Peter, 4270 Bled (SI)
(74) Representative: Borstar, Dusan
(86) International application number: PCT/SI2013/000017
(87) International publication number: WO 2013/169214

(56) References cited:
- WO-A2-2008/049943
- US-A- 3 581 708
- US-A- 4 085 762
- US-A- 4 603 658
- US-A- 4 903 637
- US-B1- 6 895 898

## Description

The present invention refers to human necessities, namely to animal husbandry and care of birds, more particular to birdhouses used either as birdfeeders or as nestboxes.

The purpose of the invention is to create a sufficiently resistant and stable, but despite to that also a simply collapsible animal house or placement, in particular a birdhouse and in the sense of functionality either a birdfeeder or a nest-box, which should be available as an integral assembly consisting either of a single part or several integrally interconnected parts, and which should be quickly and easily, optionally several times, transformed from its non-functional planar state, which is comfortable for storage and transport, into its assembled functional spatial state, which provides on the one hands a safe placement for animals and also protection of their food against the weather conditions, and on the other hand also a possibility of raising and protection of young, wherein at the same the complete assembly of such house would have to consist of a hygienically and ecologically acceptable material, which should enable simply and cheap cleaning, maintenance and also recycling.

A collapsible birdhouse is disclosed in SI 23468A and consists of a rigid wooden panel functioning as a bottom platform, as well as of a textile tent, which is attached to said platform and can be formed into a shape of two opposite surfaces of a truncated right square pyramid. In general, such birdhouse can be used as a birdfeeder, but its use is connected with numerous limitations and deficiencies. The presence of just two opposite surfaces is evidently insufficient to protect against the weather conditions, so that foodstuffs placed onto said wooden platform are exposed to weather conditions, and especially in winter time covered by snow, while by raining the food becomes wet, which initially worsen its organoleptic properties, but during the time it can also become contaminated due to microorganisms. Moreover, such house can be used exclusively in its suspended state and cannot be e.g. simply put on each suitable planar surface, since the house is not able to maintain its functional shape in such a state. Besides, manufacturing of wood and textile requires availability of both wood processing and textile processing equipment, wherein both the wood and textile may also be recycled, however separately.

A further collapsible birdhouse is disclosed in US 5,613,466 and is formed of a bottom platform, a pair of longitudinal walls, a pair of transversal walls as well as of a roof. Said bottom platform and the walls consist of thicker and relatively rigid wooden panels, while the roof is a saddle roof with slightly rounded ridge and is formed of a flexible V-shape bent plate, which is moreover supported by a longitudinal cylindrical beam, which is inserted throughout corresponding apertures in the transversal walls, by which said beam can therefore also serve for the purposes of suspending such birdhouse. Said walls are connected with each other by means of grooves, and each of transversal walls is equipped with a ledge, which enables supporting of the bottom platform. When collapsed, all parts can be aligned into a relatively flat shape similar like e.g. a book, which appears to be comfortable for storage and transporting. However, all previously mentioned parts are actually separate parts, and each of them is furnished with certain details like said grooves, which make manufacturing more complicated and also more expensive. Despite to relatively simple concept of each particular part, assembling of said parts requires certain skills, since the differences between the parts, the aim of each part and also a correct sequence of assembling must be born in mind.

A folding, rigid tent-like structure is disclosed in US 4.085,762, which comprises a bottom platform and a roof consisting of two pivotally interconnected rigid plates. Also said bottom platform is formed of two identical plates, which are pivotally interconnected by means of hinges, and each of them is pivotally interconnected with each corresponding plate of the roof. In the operating position of said structure, said plates of the bottom platform are aligned within the same plane, while in the collapsed state, said plates of the bottom platform are swiveled towards the roof. Of that reason, the structure cannot be provided with a front wall and a rear wall, which could be swiveled towards the interior of the structure, when collapsed. The structure without at least a part of said front wall and said rear wall appears not to be suitable for serving as a birdhouse, since the bird food like seeds is then insufficiently protected against the weather conditions.

A further collapsible structure is disclosed in US 4,603,658, which also comprises a bottom platform consisting of two rigid plates, which are pivotally interconnected by means of hinges, a roof consisting of two rigid plates, which are pivotally interconnected by means of hinges, a pair of lateral walls in the form of rigid plates, which are pivotally interconnected with each corresponding plate of the roof and each corresponding plate of the bottom platform by means of hinges, as well as front wall and a rear wall, which each per se consist of two pivotaly interconnected rigid plates, which are pivotally connected with said lateral walls.

In its operational state, such structure looks like a house with a bottom platform, two lateral walls, a front wall and a rear wall, as well as with a roof with a centrally arranged ridge. When collapsed, the front wall and the rear wall are each per se folded towards the interior of the house, while the roof and the bottom platform are folded outwardly. Of that reason, the structure requires a relatively large surface for storage in its collapsed state.

A prefabricated pet house is disclosed in US 6,895,898 B1, which is available as an uniform blank, which can be assembled by means of folding and interconnecting of folded portions by means of special clips. In its operational state, the structure comprises a bottom platform with a front wall and a rear wall as well as with a roof. Such structure is comfortable in the view of storage and transporting. However, said clips are required for the purposes of assembling, which makes not only the distribution and/or storage much more difficult, but also leads to the risk of missing at least one of said clips, and even to the risk of injury of each animal residing within such structure.

A still further foldable house is disclosed in US 4,903,637, which also comprises a bottom platform, a pair of rigid lateral walls, a front wall and a rear wall, as well as a roof. The bottom platform consists of two rigid plates, which are mutually interconnected by means of hinges, and each of them is pivotally interconnected with each corresponding lateral wall. The front wall in the form of a rigid plate is pivotally connected to one lateral wall by means of hinges. Also the rear wall in the form of a rigid plate is pivotally connected to the previously mentioned lateral wall by means of hinges. The roof is by means of hinges pivotally interconnected with another lateral wall. Such structure can be easily assembled, but is bulky in the view of storage, since a lot of space is required for the storage of such structure in its collapsed state.

A still further folding animal house is disclosed in US 3,581,708, which consists of two separate blanks, wherein the first blank is shaped to form an uniform and not foldable bottom platform together with a front wall and a rear wall, and the second blank is shaped to form a roof, which must be then connected to said first blank by means of adhesive. Such house is pretty simple in view of manufacturing, but relatively complicated in view of assembling, which requires some skills and accuracy in respect of correctly folding and cementing, wherein the user also needs the adhesive and probably also some other requisites. Otherwise, the structure can be easily deformed or even destroyed. In addition to that, the resistance of such house against various weather conditions also appears to be a problem.

It is moreover mentioned in WO 2008/049943 A2 that a birdhouse can be made of polypropylene.

The present invention refers to a collapsible animal house or placement, in particular to a birdhouse, comprising an appropriately rigid and during the use horizontally arranged bottom platform, an appropriately rigid roof, namely a saddle roof with a ridge which is at least in the assembled i.e. functional state of the house arranged above said bottom platform, and at least two transversal walls, namely a front wall and a rear wall, which are located at a desired distance apart from each other and extend at least approximately perpendicular with respect to said bottom platform between the last and the roof in a direction transversally with respect to said ridge, wherein the direction of said ridge on the one hand defines a longitudinal geometric axis of the house, while on the other hand a central vertical plane extends throughout said ridge.

The invention proposes that the bottom platform of such placement is formed by two sufficiently rigid and identical rectangular panels, which are pivotally connected with each other in the area of a fold, which is located in the central vertical plane of the house, and that the roof is formed of two panels, which are on the one hand pivotally connected with each other in the area of said ridge and similarly like panels of the bottom platform in the area of the central vertical plane of the house, and on the other hand said panels are each per se pivotally connected with each belonging external longitudinal edge of each neighboring panel of the bottom platform, and that said placement is also furnished with at least one retaining mean capable to maintain or retain said panels of the bottom platform in their aligned co-planar position within a single plane, and herewith indirectly also maintaining of panels of the roof in their straddled position apart from each other in a direction away from the ridge, and consequently, the overall stability of the placement as such in its assembled ready-to-use state.

In accordance with the invention, such house comprises a front wall, which is pivotally connected with said panels of the bottom platform and comprises a fold, which is located within the central vertical plane of the house, as well as the rear wall, which is also pivotally connected with said panels of the bottom platform and is also furnished with a fold located within the central vertical plane of the house.

Said front wall comprises preferably slanted external corner areas, and each panel of the roof is furnished with correspondingly located throughout passages, wherein said corner areas of the front wall are adapted to cooperate with said passages in the panels of the roof in such manner that the front wall in said straddled position of said panels of the roof is insertable into said passages and can be arrested therein, so that the panels of the bottom platform, which are connected with said front wall, are maintained in their aligned co-planar position, and simultaneously also the panels of the roof are maintained in their straddled position.

Said rear wall comprises preferably slanted external corner areas, and each panel of the roof is furnished with adequately throughout passages, wherein said corner areas of the rear wall are adapted to cooperate with said passages in the panels of the roof in such manner that the rear wall in the straddled position of said panels of the roof is insertable within said passages and can be arrested therein, by which the panels of the bottom platform, which are connected with said rear wall, are maintained in its aligned co-planar position, and simultaneously also the panels of the roof are maintained in their straddled position.

Whenever the front wall and the rear wall are aligned with the panels of the bottom platform, and are in the area of their folds by displacing the panels of the roof towards each other simultaneously with the panels of the bottom platform displaceable towards the panels i.e. essentially towards the ridge.

Each panel of the roof is furnished with a protrusion, which is pivotally connected with each belonging panel of the roof and is furnished with an adhesive layer.

The bottom platform with said panels, the wall with said panels, as well as the front wall and the rear wall are all together conceived as an integral cut-off piece of appropriately rigid panel consisting of a thermoplastic polymeric material, wherein said folds are formed by means of compression and/or adhesion.

In this, said uniform cut-off piece consists of double-layered or multi-layered propylene panel, in which air channels are available between each two layers, which are separated from each other by means of parallel walls.

Moreover, said animal house is optionally furnished with an additional member, which is attached to the front wall and by which the access to the interior of the house can be simplified. Said additional member is optionally formed of a flexible band, which is bent in form of an arch, and is furnished with appropriate recesses located on its end portions, by means of which it is then optionally in a detachable manner mounted on the front wall.

In are not claimed alternative embodiment, said animal house comprises a correspondingly rigid front wall consisting of panels, which are pivotally connected with each other in the area of the central vertical plane, and are moreover each per se pivotally connected with each belonging panel of the roof of the house, and moreover a correspondingly rigid rear wall, which is appropriately spaced apart from said front wall and also consists of two panels, which are pivotally connected with each other in the area of central vertical plane and each per se pivotally connected with each belonging panel of the roof, and moreover also a retaining member, which is suitable for maintaining each pairs of panels of the front wall and panels of the rear wall in their correspondingly aligned co-planar position. Said retaining member is preferably available in the form of a beam consisting of two sections, which are pivotally connected with each other in the area of central vertical plane of the house and can be fixed in their axially aligned position by means of an arresting member, wherein said retaining member is also in adjacency of the front wall and/or the rear wall pivotally connected with each panel of the roof. Both the rear wall and the front wall, which is preferably furnished with a circular inlet aperture, preferably extend over the complete height between the bottom platform and the roof. The ridge is optionally formed as a ledge, by which the panels of the roof can be pivotally connected with each other in such manner that each of them is pivotally connected with said ridge in the form of ledge. Said embodiment of the invention preferably provides, that the panels of the bottom platform, the panels of the roof, the front wall, the rear wall, said sections of the retaining member, and preferably also the ridge, when available in the form of ledge, consist of wood.

The invention will be described by means of embodiments, which are presented in the attached drawings, wherein
- Fig. 1: is a perspective view of the first embodiment of an animal house or placement, namely a collapsible birdhouse, in particular a birdfeeder, in its assembled ready-to-use state;
- Fig. 2: is a schematically presented cut-off piece consisting of appropriate flat material, by which the embodiment according to Fig. 1 is realized;
- Fig. 3: is again a perspective view of a further embodiment of an animal house or placement, during assembling thereof;
- Fig. 4: is an orthogonal side view of the embodiment according to Figs 1 and 2, however in its initial state prior to assembling;
- Fig. 5: is a perspective view of a further embodiment of an animal house or placement, namely an assembled birdhouse according to Fig. 3,
- Fig. 6: is a schematically presented cut-off piece consisting of appropriate flat material, by which the embodiment according to Fig. 3 or 5 is realized;
- Fig. 7: is a perspective view of a further embodiment of an animal house or placement, namely a collapsible birdhouse, in particular a nest placement, in its assembled ready-to-use state;
- Fig. 8: is a perspective view of the embodiment according to Fig. 7 during assembling thereof; and
- Fig. 9: is an orthogonal side view of the embodiment according to Figs 7 and 8 in its initial state prior to assembling.

An animal house or placement in its assembled state during the use essentially comprises at least approximately horizontal bottom platform 1 as well as a roof 2 arranged above it, and preferably also a front wall 3 and a rear wall 4, which are located apart from each other and above said bottom platform 1 and below said roof 2.

The invention provides that all previously mentioned parts, namely the bottom platform 1, the roof 2, the front wall 3 and the rear wall 4, are integrally connected with each other and together form an integral assembly, which can be converted from essentially planar non-functional state into a spatial functional state, or vice versa. When available in said spatial functional state, such assembly is suitable for functioning as a house or a placement, which is capable to protect animals or food prepared for them against the weather conditions and/or natural enemies, or also to enable breeding, in particular in the context of raise and protection each young. On the other hand, when such assembly is available in its planar non-functional state, it is extremely comfortable for safely and efficiently transporting, or also for storage or the like.

The described embodiments and variations refer to a birdhouse, which is either used as a birdfeeder or as a nest-box, which shall however not be understood as limitation of the invention in the sense of exploitation thereof. Those skilled in the art shall understand that a birdhouse represents just one of various possible applications of such animal house or placement in the context of this invention, and can generally be designed to provide house or placement for birds, either for small birds like passerines, medium birds like pigeons, or also for larger birds of prey like falcons, and moreover also for other animals, in particular mammals like dogs, cats or rabbits, and optionally also to reptiles.

Said bottom platform 1 substantially provides a sufficiently rigid and at least essentially horizontal surface, which is suitable for placing and storage of seeds, in particular when the house or placement according to the invention is used as a birdhouse, or to support a nest, when the birdhouse is used as a nest-box.

The roof 2 is essentially provided to protect the complete functional area of the bottom platform 1 against the weather conditions. The house or placement according to the invention is furnished with a saddle roof with a ridge 20, the orientation of which on the one hand defines a longitudinal direction of the placement and on the other and also a vertical plane, which extends throughout the line of said ridge 20, and preferably, especially when the placement is suspended during the use, also represents a plane of symmetry of the complete assembly.

The front wall 3 and the rear wall 4 are generally adapted at least to protect the functional surface of the bottom platform 1 against the weather conditions, in particular against rain, snow and wind, but may when desired also be used for the purposes of forming an inlet aperture, and in particular by raise of young also to protect them efficiently against the other weather conditions like direct radiation of sun rays, or also against the natural enemies of each particular animal variety concerned, for which such house or placement is primarily intended.

Moreover, said front wall 3 and rear wall 4 can optionally also be used for positioning of the roof 2 and the bottom platform 1 relative to each other, and consequently for the purposes of establishing each required stability of the house or placement in its spatial functional state, by which also a desired functionality is assured.

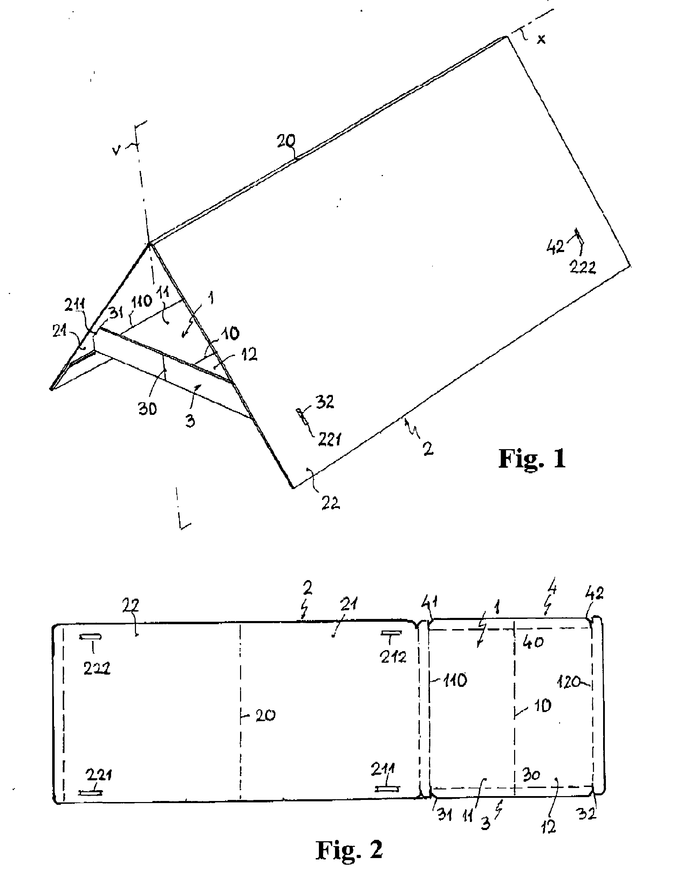

Some of possible embodiments of the animal house or placement, namely of a birdhouse, are shown in Figs 1 - 9. Such placement generally comprises said sufficiently rigid and essentially horizontal bottom platform 1, the roof 2, in particular a saddle roof with a ridge 20, which is at least in the assembled state of the placement located above the bottom platform 1, which is completely covered therewith, and moreover preferably also two transversal walls 3, 4, namely the front wall 3 and the rear wall, which are spaced apart from each other and extend at least approximately perpendicular with respect to said bottom platform 1 between the last and the roof 2 and transversely with respect to the line of the ridge 20. The line of said ridge 20 on the one hand defines a longitudinal axis x of said placement, and on the other hand a vertical plane *v* of the placement, which extends throughout said line of the ridge 20.

In accordance with the invention, said bottom platform 1 of the placement is formed by two sufficiently rigid and preferably identical rectangular panels 11, 12, which are pivotally connected with each other in the area of a fold 10, which is located in the central vertical plane *v* of the placement. The roof 2 is formed of two panels 21, 22, which arc on the one hand pivotally connected with each other in the area of said ridge 20 and similarly like panels 11, 12 of the bottom platform 1 in the area of the central vertical plane *v* of the placement, and on the other hand said panels 21, 22 are each per se pivotally connected with each belonging external longitudinal edge 110, 120 of each neighboring panel 11, 12 of the bottom platform 1.

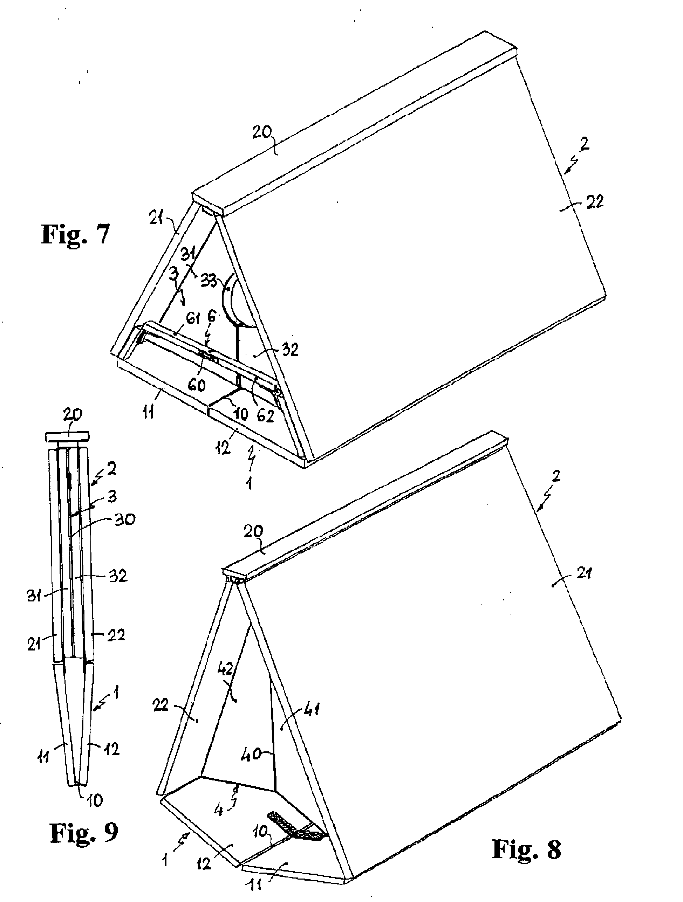

Moreover, said placement is also furnished with at least one means, e.g. with the front wall 3 and/or the rear wall 4 (Figs 1, 3 and 5) or with a retaining member 6 (Fig. 7), which is optionally i.e. during the use of the placement, capable to maintain or retain said panels 11, 12 of the bottom platform 1 in their aligned co-planar position within a single plane, and herewith indirectly also maintaining of panels 21, 22 of the roof 2 in their straddled position apart from each other in a direction away from the ridge 20, and consequently, the overall stability of the placement as such in its assembled ready-to-use state.

One of the possible embodiments of the invention is furnished with a front wall 3, which is pivotally connected with said panels 11, 12 of the bottom platform 1 and comprises a fold 30, which is located within the central vertical plane *v* of the placement, and also the rear wall 4, which is also pivotally connected with said panels 11, 12 of the bottom platform 1 and is also furnished with a fold 40 located within the central vertical plane *v* of the placement. Said front wall 3 is furnished with preferably slanted external corner areas 31, 32, and each panel 21, 22 of the roof 2 is furnished with correspondingly located throughout passages 211, 221 (Figs 1 - 6), wherein said corner areas 31, 32 of the front wall 3 are adapted to cooperate with said passages 211, 221 in the panels 21, 22 of the roof 2 in such manner that the front wall 3 in said straddled position of said panels 21, 22 of the roof 2 is insertable and can be arrested within said passages 211, 221, by which the panels 11, 12 of the bottom platform 1, which are connected with said front wall 3, are maintained in their aligned co-planar position, and simultaneously also the panels 21, 22 of the roof 2 are maintained in their straddled position, by which also the placement as a whole is maintained in its functional spatial state. Moreover, said rear wall 4 is also furnished with preferably slanted external corner areas 41, 42, and each panel 21, 22 of the roof 2 is furnished with adequately throughout passages 212, 222 (Figs 1 - 6), wherein said corner areas 41, 42 of the rear wall 4 are adapted to cooperate with said passages 212, 222 in the panels 21, 22 of the roof 2 in such manner that the rear wall 4 in said straddled position of said panels 21, 22 of the roof 2 is insertable and can be arrested within said passages 212, 222, by which the panels 11, 12 of the bottom platform 1, which are connected with said rear wall 4, are maintained in its aligned co-planar position, and simultaneously also the panels 21, 22 of the roof 2 are maintained in their straddled position, by which also the placement as a whole is maintained in its functional spatial state.

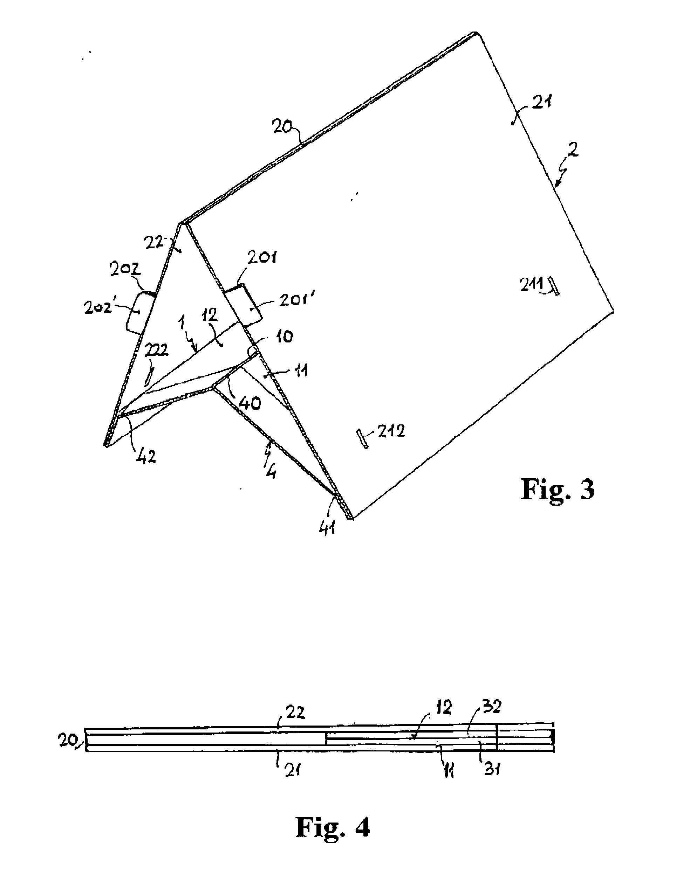

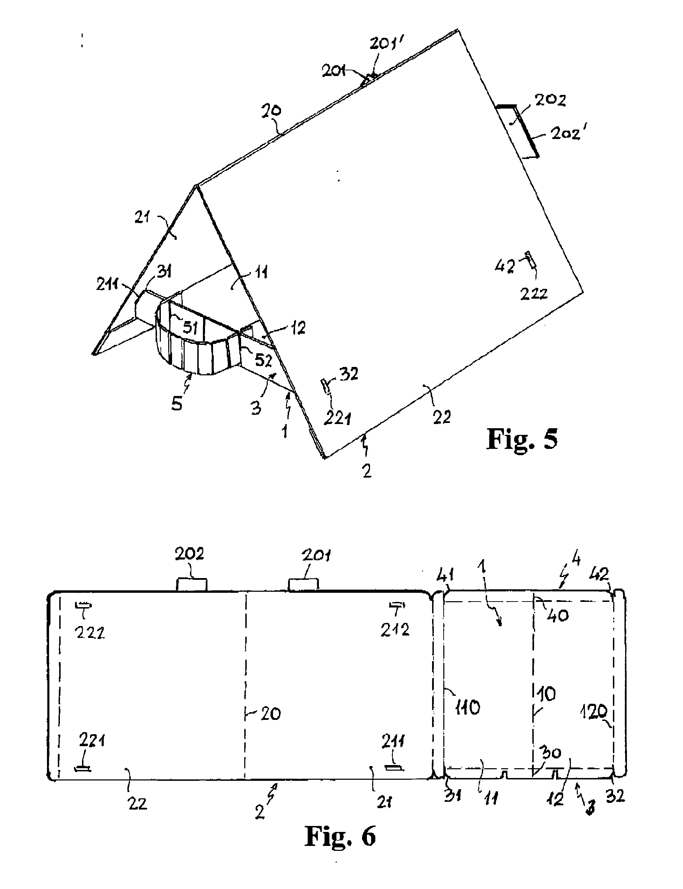

When the front wall 3 and the rear wall 4 are aligned with the panels 11, 12 of the bottom platform 1 (Figs. 2 and 6), they are in the area of their folds 30, 40 during displacing the panels 21, 22 of the roof 2 towards each other simultaneously with the panels 11, 12 of the bottom platform 1 displaceable towards the panels 21, 22 i.e. substantially towards the ridge 20, namely into position according to Fig. 3 and after that into position according to Figs 1 and 5.

In a further embodiment of the placement (Figs. 3, 5 and 6), each panel 21, 21 of the roof 2 is furnished with a protrusion 201, 202, which is pivotally connected with each panel 21, 22 of the roof 2 and comprises an adhesive layer 201', 202'. Such embodiment allows attachment of the house onto a vertical surface, which in connection with a birdhouse means a possibility of simply sticking thereof onto the outer surface of a window sheet

The house according to the present invention can be easily realized, when the bottom platform 1 with said panels 11, 12, the wall 22 with said panels 21, 22, as well as the front wall 3 and the rear wall 4 are manufactured as an integral cut-off piece of appropriately rigid panel consisting of a thermoplastic polymeric material, wherein said folds 10, 20, 30, 40 are formed by means of compression and/or adhesion. In this, said integral cut-off piece preferably consists of double-layered or multi-layered propylene panel, in which air channels are available between each two layers, which are separated from each other by means of parallel walls, which is e.g. presented in Fig. 3.

Regarding said cut-off piece, which is schematically presented in Figs 2 and 6, when using the previously mentioned material, all folds 10, 20, 30, 40 can be easily manufactured by means of thermal plasticizing and compression, and the panel 22 of the roof 2 is connected to the panel 12 of the bottom platform 1 in the area of the external edge 120 by means of adhesion, either by means of adhesive or by means of plasticizing followed by compression, or ultrasonic or optionally in any other manner. Consequently, an integral assembly is established, which can be easily transformed into a house according to the invention. To this aim, said panels 21, 22 of the roof 2 (Fig. 3) need to be straddled, by which the panels 11, 12 of the bottom platform 1 are automatically brought into their aligned co-planar position within the same plane, which is then followed by folding of the front wall 3 and the rear wall 4 and inserting their corner areas 31, 32; 41, 42 into passages 211, 212; 221, 222 in both panels 21, 22 of the roof 2 up to arresting thereof. Such, the integral assembly is maintained in its spatial functional state (Figs 1 and 5) which provides a comfortable house or placement for each desired animal variety. An additional member 5 is optionally attached to the front wall 3, by which the access to the bottom platform 1 can be simplified. Said member 5 is e.g. formed of a flexible band, which is bent in form of an arch, and is furnished with appropriate recesses 51, 52 located on its end portions, by means of which it is then, when desired, in a detachable manner mounted on the front wall 3. Such house is suitable for placing onto appropriate platform or also for suspending, or also for sticking to a smooth vertical surface by means of the previously mentioned protrusions 201, 202. The placement according to Figs 1 to 6 is useful as a birdfeeder, which is however in comparison with known birdfeeders relatively cheap, simple for assembling, simple for cleaning and therefore hygienic, and is moreover also environment friendly, since it can also be recycled in the same manner like any other plastic waste.

A further embodiment of an animal house according the invention is shown in Figs 7 - 9. Such house comprises a correspondingly rigid front wall 3 consisting of panels 31, 32, which are pivotally connected with each other in the area of the central vertical plane *v*, and are moreover each per se pivotally connected with each belonging panel 21, 22 of the roof 2 of the house, and moreover a correspondingly rigid rear wall 4, which is appropriately spaced apart from said front wall 3 and also consists of two panels 41, 42, which are pivotally connected with each other in the area of central vertical plane *v* and each per sc pivotally connected with each belonging panel 21, 22 of the roof 2, wherein such house further comprises a retaining member 6, which is suitable for maintaining each pairs of panels 31, 32 of the front wall 3 and panels 41, 42 of the rear wall 4 in their correspondingly aligned co-planar position. In this, said retaining member 6 (Fig. 7) is e.g. available in the form of a beam consisting of two sections 61, 62, which are pivotally connected with each other in the area of central vertical plane *v* of the house and can be fixed in their axially aligned position by means of an arresting member 60, wherein said retaining member is also in adjacency of the front wall 3 or the rear wall 4 pivotally connected with each panel 21, 22 of the roof 2.

The embodiment according to Figs 7 - 9 refers to a house or placement, which shall be preferably used as a nest-box i.e. for breeding, wherein the rear wall 4 and the front wall 3 extend over the complete height between the bottom platform 1 and the roof 2. Consequently, the placement is closed from all sides, and the front wall is furnished with a circular inlet aperture 33, the diameter of which is adjusted to requirements related to each particular variety of birds, for which each house is preferably intended.

In this particular case, the ridge 20 is formed as a ledge, and the panels 21, 22 of the roof 2 are pivotally connected with each other in such manner that each of them is pivotally connected with said ridge 20 in the form of ledge. Moreover, in this particular case the panels 11, 12 of the bottom platform 1, the panels 21, 22 of the roof, the front wall 3, the rear wall 4, said sections 61, 62 of the retaining member 6, and preferably also the ridge 20, when available in the form of ledge, preferably consist of wood. Also in such case the house is available as an integral assembly, which can be by means of pivoting both panels 11, 12 of the bottom platform 1 into a single plane by simultaneously straddling both panels 21, 22 of the roof 2 (Fig. 8) transformed from essentially planar non-functional state to a spatial functional state according to Fig. 7, in which the sections 61, 62 of the retaining member 6 are axially aligned. Such state can be easily maintained, when said sections 61, 62 are fixed in their position by means of an arresting member 60. The house according to Figs 7 - 9 can be easily collapsed by means of releasing said arresting member 60, which is followed by pivoting the panels 11, 12 of the bottom platform 1 relative to the central vertical plane *v* and displacing thereof away from the roof 2, as well as by pivoting the panels 31, 32 of the front wall 3 inwardly towards the rear wall 4, and by simultaneously pivoting the panels 41, 42 of the rear wall 4 inwardly and towards the front wall 3, and also by pivoting the panels 21, 22 of the roof towards each other around the longitudinal axis x i.e. the ridge 20 of the house, namely back into essentially planar state of the house in accordance with Fig. 9.

## Claims

1. Collapsible animal house or placement, in particular a birdhouse, comprising an appropriately rigid and during the use horizontally arranged bottom platform (1), an appropriately rigid roof (2), namely a saddle roof with a ridge (20) which is at least in the assembled i.e. functional state of the house arranged above said bottom platform (1), and at least two transversal walls (3, 4), namely a front wall (3) and a rear wall (4), which are located at a desired distance apart from each other and extend at least approximately perpendicular with respect to said bottom platform (1) between the last and the roof (2) in a direction transversally with respect to said ridge (20), wherein the direction of said ridge (20) on the one hand defines a longitudinal geometric axis (x) of the house, while on the other hand a central vertical plane (v) extends throughout said ridge (20), wherein the bottom platform (1) of the placement is formed by two sufficiently rigid and identical rectangular panels (11, 12), which are pivotally connected with each other in the area of a fold (10), which is located in the central vertical plane (v) of the house, and that the roof (2) is formed of two panels (21, 22), which are on the one hand pivotally connected with each other in the area of said ridge (20) and similarly like panels (11, 12) of the bottom platform (1) in the area of the central vertical plane (v) of the house, and on the other hand said panels (21, 22) are each per se pivotally connected with each belonging external longitudinal edge (110, 120) of each neighboring panel (11, 12) of the bottom platform (1), and that said placement is also furnished with at least one retaining means, in particular a wall (3, 4), which is capable to maintain or retain said panels (11, 12) of the bottom platform (1) in their aligned co-planar position within a single plane, and herewith indirectly also maintaining of panels (21, 22) of the roof (2) in their straddled position apart from each other in a direction away from the ridge (20), and consequently, the overall stability of the placement as such in its assembled ready-to-use state,
**characterized in that** such house comprises a front wall (3), which is pivotally connected with said panels (11, 12) of the bottom platform (1) and comprises a fold (30), which is located within the central vertical plane (v) of the house, as well as the rear wall (4), which is also pivotally connected with said panels (11, 12) of the bottom platform (1) and is also furnished with a fold (40) located within the central vertical plane (v) of the house,
wherein said front wall (3) comprises preferably slanted external corner areas (31, 32), and each panel (21, 22) of the roof (2) is furnished with correspondingly located throughout passages (211, 221), wherein said corner areas (31, 32) of the front wall (3) are adapted to cooperate with said passages (211, 221) in the panels (21, 22) of the roof (2) in such manner that the front wall (3) in said straddled position of said panels (21, 22) of the roof (2) is insertable into said passages (211, 221) and can be arrested therein, so that the panels (11, 12) of the bottom platform (1), which are connected with said front wall (3), are maintained in their aligned co-planar position, and simultaneously also the panels (21, 22) of the roof (2) are maintained in their straddled position,
and wherein said rear wall (4) comprises preferably slanted external corner areas (41, 42), and each panel (21, 22) of the roof (2) is furnished with adequately throughout passages (212, 222), wherein said corner areas (41, 42) of the rear wall (4) are adapted to cooperate with said passages (212, 222) in the panels (21, 22) of the roof (2) in such manner that the rear wall (4) in the straddled position of said panels (21, 22) of the roof (2) is insertable within said passages (212, 222) and can be arrested therein, by which the panels (11, 12) of the bottom platform (1), which are connected with said rear wall (4), are maintained in its aligned co-planar position, and simultaneously also the panels (21, 22) of the roof (2) are maintained
in their straddled position,
and wherein the bottom platform (1) with said panels (11, 12), the roof (2) with said panels (21, 22), as well as the front wall (3) and the rear wall (4) are all together conceived as an integral cut-off piece of appropriately rigid panel consisting of a thermoplastic polymeric material, wherein said folds (10, 20, 30, 40) arc formed by means of compression and/or adhesion.

2. Animal house according to Claim 2, **characterized in that** said uniform cut-off piece consists of double-layered or multi-layered propylene panel, in which air channels are available between each two layers, which are separated from each other by means of parallel walls.

3. Animal house according to Claim 1 or 2, **characterized in that** each panel (21, 22) of the roof (2) is furnished with a protrusion (201, 202), which is pivotally connected with each belonging panel (21, 22) of the roof (2) and is furnished with an adhesive layer (201', 202').

4. Animal house according to anyone of the preceding Claims, **characterized in that** an additional member (5) is optionally attached to the front wall (3), by which the access to the interior of the house can be simplified.

5. Animal house according to Claim 4, **characterized in that** said additional member (5) is formed of a flexible band, which is bent in form of an arch, and is furnished with appropriate recesses (51, 52) located on its end portions, by means of which it is then in a detachable manner mounted on the front wall (3).

## Patentansprüche

1. Zusammenklappbare Tierbehausung oder -unterbringung, insbesondere ein Vogelhaus, umfassend: eine entsprechend steife und während der Benutzung horizontal angeordnete Bodenplattform (1), ein entsprechend steifes Dach (2), das heißt ein Satteldach mit einem First (20), der zumindest im zusammengebauten, das heißt im funktionellen Zustand des Hauses über der Bodenplattform (1) angeordnet ist, und mindestens zwei quer verlaufende Wände (3, 4), d. h. eine vordere Wand (3) und eine hintere Wand (4), die sich in einem gewünschten Abstand zueinander befinden und zumindest annähernd senkrecht bezüglich der Bodenplattform (1) zwischen letzerer und dem Dach (2) in einer Richtung quer bezüglich der First (20) verlaufen, wobei die Richtung des Firsts (20) einerseits eine geometrische Längsachse (x) des Hauses definiert, während andererseits eine vertikale Mittelebene (v) sich durchgehend der First (20) erstreckt, wobei die Bodenplattform (1) der Unterbringung aus zwei ausreichend steifen und identischen rechteckigen Platten (11, 12) gebildet ist, die schwenkbar miteinander im Bereich eines Falzes (10), der sich in der vertikalen Mittelebene (v) des Hauses befindet, verbunden sind, und dass das Dach (2) aus zwei Platten (21, 22) gebildet ist, die einerseits schwenkbar miteinander im Bereich des Firstes (20) verbunden sind, und aus ähnlich gleichen Platten (11, 12) der Bodenplattform (1) im Bereich der vertikalen Mittelebene (v) des Hauses, und andererseits die Platten (21, 22) jeweils für sich mit jeder dazugehörigen äußeren Längskante (110, 120) der jeweils benachbarten Platte (11, 12) der Bodenplattform (1) schwenkbar verbunden sind, und dass die Unterbringung mit mindestens einem Haltemittel versehen ist, insbesondere eine Wand (3, 4), die die Platten (11, 12) der Bodenplattform (1) in ihrer jeweils ausgerichteten koplanaren Stellung in einer einzigen Ebene halten oder befestigen kann, und wobei damit indirekt auch die Platten (21, 22) des Daches (2) in ihrer gespreizten Stellung voneinander beabstandet in einer Richtung weg vom First (20), und folglich die Gesamtstabilität der Unterbringung als solche in zusammengebautem gebrauchsfertigen Zustand gehalten werden,
**dadurch gekennzeichnet, dass** dieses Haus eine vordere Wand (3) umfasst, die schwenkbar an den Platten (11, 12) der Bodenplattform (1) verbunden ist und einen Falz (30) umfasst, der sich in der vertikalen Mittelebene (v) des Hauses befindet, sowie die hintere Wand (4) umfasst, die ebenfalls schwenkbar mit den Platten (11, 12) der Bodenplattform (1) verbunden ist und auch mit einem Falz (40) versehen ist, der sich in der vertikalen Mittelebene (v) des Hauses befindet,
wobei die vordere Wand (3) vorzugsweise abgeschrägte äußere Eckbereiche (31, 32) umfasst, und jede Platte (21, 22) des Daches (2) mit entsprechend sich befundenen angeordneten Durchgangspassagen (211, 221) versehen ist, wobei die Eckbereiche (31, 32) der vorderen Wand (3) so ausgestaltet sind, um mit den Passagen (211, 221) in den Platten (21, 22) des Daches (2) so zusammenzuwirken, dass die vordere Wand (3) in der gespreizten Stellung der Platten (21, 22) des Daches (2) in die Passagen (211, 221) einführbar ist und dort arretiert werden kann, so dass die Platten (11, 12) der Bodenplattform (1), die mit der vorderen Wand (3) verbunden sind, in ihrer ausgerichteten koplanaren Stellung gehalten werden, und gleichzeitig auch die Platten (21, 22) des Daches (2) in ihrer gespreizten Stellung gehalten werden,
und wobei die hintere Wand (4) vorzugsweise abgeschrägte äußere Eckbereiche (41, 42) umfasst, und jede Platte (21, 22) des Daches (2) mit entsprechenden Durchgangsöffnungen (212, 222) versehen ist, wobei die Eckbereiche (41, 42) der hinteren Wand (4) so ausgestaltet sind, um mit den Passagen (212, 222) in den Platten (21, 22) des Daches (2) so zusammenzuwirken, dass die hintere Wand (4) in der gespreizten Stellung der Platten (21, 22) des Daches (2) in die Passagen (211, 222) einführbar ist werden und dort arretiert werden kann, wodurch die Platten (11, 12) der Bodenplattform (1), die mit der hinteren Wand (4) verbunden sind, in ihrer ausgerichteten koplanaren Stellung gehalten werden, und gleichzeitig auch die Platten (21, 22) des Daches (2) in ihrer gespreizten Stellung gehalten werden, und wobei die Bodenplattform (1) mit den Platten (11, 12), das Dach (2) mit den Platten (21, 22) sowie die vordere Wand (3) und die hintere Wand (4) alle zusammen als ein einstückiger Zuschnitt einer entsprechend steifen Platte, die aus einem thermoplastischen Polymermaterial besteht, konzipiert sind, wobei die Falze (10, 20, 30, 40) durch Kompression oder Adhäsion gebildet werden.

2. Tierbehausung gemäß Anspruch 2, **dadurch gekennzeichnet, dass** der einheitliche Zuschnitt aus einer doppellagigen oder mehrlagigen Propylenplatte besteht, in der sich Luftkanäle zwischen jeweils zwei Lagen befinden, welche durch parallele Wände voneinander getrennt sind.

3. Tierbehausung gemäß Anspruch 1 oder 2, **dadurch gekennzeichnet, dass** jede Platte (21, 22) des Daches (2) mit einem Überstand (201, 202) versehen ist, der schwenkbar mit der jeweils dazu gehörigen Platte (21, 22) des Daches (2) verbunden und mit einer Klebeschicht (201', 202') versehen ist.

4. Tierbehausung gemäß einem der vorhergehenden Absprüche, **dadurch gekennzeichnet, dass** optional ein zusätzliches Bauelement (5) an der vorderen Wand (3) befestigt ist, wodurch der Zugang zum Inneren des Hauses erleichtert werden kann.

5. Tierbehausung gemäß Anspruch 4, **dadurch gekennzeichnet, dass** das zusätzliche Bauelement (5) aus einer flexiblen Leiste gebildet ist, die bogenförmig gebogen ist, und mit entsprechenden Ausnehmungen (51, 52), die sich an seinen Endbereichen befinden, versehen ist, wodurch es dann an der vorderen Wand (3) abnehmbar befestigt werden kann.

## Revendications

1. Refuge ou abri pliant pour animaux, en particulier un nichoir, comprenant une plateforme inférieure (1) disposée horizontalement pendant l'utilisation et rigide de manière adéquate, un toit rigide (2) de manière adéquate, en particulier un toit en bâtière avec une arête (20) qui est au moins dans l'état assemblé, c'est-à-dire fonctionnel, du refuge disposé au-dessus de ladite plate-forme inférieure (1), et au moins deux parois transversales (3, 4), en particulier une paroi avant (3) et une paroi arrière (4), qui sont situées à une distance souhaitée l'une de l'autre et s'étendent au moins approximativement perpendiculairement par rapport à ladite plate-forme inférieure (1) entre la dernière et le toit (2) dans une direction transversale par rapport à ladite arête (20), dans lequel la direction de ladite arête (20) d'une part définit un axe géométrique longitudinal (*x*) du refuge, tandis que d'autre part un plan vertical central (*v*) étend à travers ladite arête (20), dans laquelle la plate-forme inférieure (1) de l'abri est formée par deux panneaux rectangulaires suffisamment rigides et identiques (11, 12), qui sont reliés l'un à l'autre de façon pivotante dans la zone d'un pli (10), qui est situé dans le plan vertical central (*v*) du refuge, et le toit (2) est formé de deux panneaux (21, 22), qui sont d'une part reliés l'un à l'autre de façon pivotante dans la région de ladite arête (20) et de manière similaire comme les panneaux (11, 12) de la plate-forme inférieure (1) dans la zone du plan vertical central (v) du refuge, et d'autre part lesdits panneaux (21, 22) sont chacun en soi reliés de façon pivotante à chaque bord longitudinal externe d'appartenance (110, 120) de chaque panneau voisin (11, 12) de la plate-forme inférieure (1), et ledit abri est également muni d'au moins un moyen de retenue en particulier une paroi (3, 4), qui est capable de maintenir ou retenir lesdits panneaux (11, 12) de la plate-forme inférieure (1) dans leur position alignée coplanaire dans un seul plan, et ainsi maintenant indirectement aussi les panneaux (21, 22) du toit (2) dans leur position à cheval séparés les uns des autres dans une direction opposée à l'arête (20) et, par conséquent, la stabilité globale de l'abri en tant que tel dans son état assemblé prêt à l'emploi,
**caractérisé en ce que** ce refuge comprend une paroi avant (3), qui est reliée de manière pivotante auxdits panneaux (11, 12) de la plate-forme inférieure (1) et comprend un pli (30), qui est situé dans le plan central vertical (v) du refuge, aussi bien que la paroi arrière (4), qui est également reliée de manière pivotante auxdits panneaux (11, 12) de la plate-forme inférieure (1) et est également fourni avec un pli (40) situé dans le plan central vertical (*v*) du refuge,
dans lequel ladite paroi avant (3) comprend des zones de coin externes de préférence inclinées (31, 32), et chaque panneau (21, 22) du toit (2) est muni de passages traversants (211, 221) positionnés en conséquence, dans lequel lesdites zones de coin (31, 32) de la paroi avant (3) sont adaptées pour coopérer avec lesdits passages (211, 221) dans les panneaux (21, 22) du toit (2) de telle manière que la paroi avant (3) dans ladite position à cheval desdits panneaux (21, 22) du toit (2) peut être insérée dans lesdits passages (211, 221) et peut y être arrêtée, de sorte que les panneaux (11, 12) de la plate-forme inférieure (1), qui sont reliés avec ladite paroi avant (3), sont maintenus dans leur position coplanaire alignée, et également de manière simultané les panneaux (21, 22) du toit (2) sont maintenus dans leur position à cheval,
et dans lequel ladite paroi arrière (4) comprend des zones de coin externes de préférence inclinées (41, 42), et chaque panneau (21, 22) du toit (2) est muni de manière adéquate de passages traversants (212, 222), dans lequel lesdites zones de coin (41, 42) de la paroi arrière (4) sont adaptés pour coopérer avec lesdits passages (212, 222) dans les panneaux (21, 22) du toit (2) de telle sorte que la paroi arrière (4) dans la position à cheval desdits panneaux (21, 22) du toit (2) peut être insérée à l'intérieur desdits passages (212, 222) et peut y être arrêtée, les panneaux (11, 12) de la plate-forme inférieure (1), qui sont reliés à ladite paroi arrière (4), étant maintenus dans leur position coplanaire alignée, et également de manière simultané les panneaux (21, 22) du toit (2) sont maintenus dans leur position à cheval,
et dans lequel la plateforme inférieure (1) avec lesdits panneaux (11, 12), le toit (2) avec lesdits panneaux (21, 22), ainsi que la paroi avant (3) et la paroi arrière (4) sont tous conjointement conçus comme une pièce de découpe d'un seul tenant d'un panneau rigide de manière adéquate constitué d'un matériau polymère thermoplastique, dans lequel lesdits plis (10, 20, 30, 40) sont formés par des moyens de compression et/ou d'adhérence.

2. Refuge pour animaux selon la revendication 2, **caractérisé en ce que** ladite pièce de découpe uniforme se compose d'un panneau à double couche ou à plusieurs couches de propylène, dans lequel des canaux d'air sont disponibles toutes les deux couches, qui sont séparées l'une de l'autre au moyen de parois parallèles.

3. Refuge pour animaux selon la revendication 1 ou 2, caractérisé en ce chaque panneau (21, 22) du toit (2) est muni d'une saillie (201, 202), qui est reliée de manière pivotante à chaque panneau d'appartenance (21, 22) du toit (2) et est muni d'une couche adhésive (201', 202').

4. Refuge pour animaux selon l'une quelconque des revendications précédentes, **caractérisé en ce que** un élément supplémentaire (5) est fixé de manière facultative à la paroi avant (3), par l'intermédiaire duquel l'accès à l'intérieur du refuge peut être simplifié.

5. Refuge pour animaux selon la revendication 4, **caractérise en ce que** ledit élément supplémentaire (5) est formé d'une bande flexible, laquelle est pliée sous la forme d'une arche, et est muni d'évidements appropriés (51, 52) positionnés sur ses parties d'extrémité, par l'intermédiaire desquels il est ensuite monté de manière amovible sur la paroi avant (3).
